# EUROPÄISCHE PATENTANMELDUNG

(11) **EP 1 526 721 A1**
(43) Veröffentlichungstag der Anmeldung: **27.04.2005**
(21) Anmeldenummer: 03024248.1
(22) Anmeldetag: 22.10.2003
(51) Int. Cl.: H04N 5/44, G08G 1/0962, G09B 29/10, G01C 21/34, G09F 27/00, G01S 5/14

(54) **Verfahren und System zur Wiedergabe von Audio- und/oder Videodaten**

(71) Anmelder: Ernst, Melanie, 82319 Starnberg (DE)
(72) Erfinder: ERNST, Melanie, 82319 Stamberg (DE)
(74) Vertreter: Manitz, Finsterwald & Partner GbR

(57) **Zusammenfassung**

Die Erfindung betrifft ein Wiedergabeverfahren, bei dem eine Einrichtung zur Wiedergabe von Audio- und/ oder Videodaten in einem Nutzungsbereich bewegt, mittels einer Einrichtung zur Positionsbestimmung die momentane Position der Wiedergabeeinrichtung im Nutzungsbereich ermittelt, zumindest eine von der ermittelten Momentanposition der Wiedergabeeinrichtung abhängige Audio- und/oder Videoaufnahme bereitgestellt, und die bereitgestellte Audio- und/oder Videoaufnahme mittels der Wiedergabeeinrichtung wiedergegeben wird.

Die Erfindung betrifft außerdem ein Wiedergabesystem, das zur Verwendung in einem derartigen Verfahren ausgebildet ist.

## Beschreibung

Die Erfindung betrifft ein Wiedergabeverfahren, bei dem eine Einrichtung zur Wiedergabe von Audio- und/oder Videodaten in einem Nutzungsbereich bewegt wird. Die Erfindung betrifft außerdem ein Wiedergabesystem mit einer derartigen Wiedergabeeinrichtung.

Reisende in Fahrzeugen mit Musik oder Filmen zu unterhalten, ist grundsätzlich bekannt. Beispielsweise in Flugzeugen oder Zügen werden hierzu spezielle Audio- und Videokanäle angeboten. Häufig werden Reise- oder Urlaubsprogramme gezeigt, die Informationen über bestimmte Reiseziele vermitteln oder mit für bestimmte Reiseziele typischer Musik unterhalten. Ebenfalls bekannt ist es, Besuchern von Ausstellungen, Museen oder Sehenswürdigkeiten tragbare Geräte zur Verfügung zu stellen, an denen der Benutzer, während er z.B. durch eine Ausstellung geht und an eine vorgegebene Station gelangt, eine bestimmte Stationskennung eingeben muss, um einen für die betreffende Station hinterlegten gesprochenen Textbeitrag hören zu können. Es besteht folglich Bedarf dafür, insbesondere Reisenden und Touristen Informationen zur Verfügung zu stellen, die sich auf bestimmte räumlich begrenzte Bereiche beziehen.

Aufgabe der Erfindung ist es, eine Möglichkeit zu schaffen, sich fortbewegende Personen auf möglichst einfache und komfortable Weise mit grundsätzlich beliebiger Information und Unterhaltung zu versorgen, die einen Bezug zu dem momentanen Aufenthaltsort der Person haben, wobei dies insbesondere für sich sowohl mit einem Fahrzeug als auch zu Fuß fortbewegende Personen möglich sein soll.

Die Lösung dieser Aufgabe erfolgt durch die Merkmale des das Wiedergabeverfahren betreffenden Anspruchs 1 und insbesondere dadurch, dass mittels einer Einrichtung zur Positionsbestimmung die momentane Position der Wiedergabeeinrichtung im Nutzungsbereich ermittelt, zumindest eine von der ermittelten Momentanposition der Wiedergabeeinrichtung abhängige Audio- und/oder Videoaufnahme bereitgestellt und die bereitgestellte Audio- und/oder Videoaufnahme mittels der Wiedergabeeinrichtung wiedergegeben wird.

Die Lösung der vorstehend genannten Aufgabe erfolgt außerdem durch die Merkmale des auf das Wiedergabesystem gerichteten Anspruchs 17 und insbesondere dadurch, dass eine Einrichtung zur Positionsbestimmung, mittels welcher die momentane Position der Wiedergabeeinrichtung im Nutzungsbereich ermittelbar ist, sowie ein Datenarchiv, das eine Mehrzahl von positionsspezifischen Audio- und/oder Videoaufnahmen umfasst, die jeweils wenigstens einer Position im Nutzungsbereich zugeordnet sind, und/oder wenigstens ein zur Aufnahme positionsspezifischer Audiound/oder Videoaufnahmen ausgebildetes Aufnahmesystem, das sich an einem von der ermittelten Momentanposition abhängigen Aufnahmeort befindet, vorgesehen sind, wobei wenigstens eine positionsspezifische Audio- und/oder Videoaufnahme automatisch in Abhängigkeit von der ermittelten Position zur Wiedergabe mittels der Wiedergabeeinrichtung bereitstellbar ist.

Durch die Erfindung kann insbesondere ein vollautomatischer, gewissermaßen "sprechender" Reiseführer realisiert werden, der automatisch durch die Positionsbestimmung einen Bezug zu der Momentanposition des Benutzers herstellt und positionsspezifische, d.h. für den momentanen Aufenthaltsort des Benutzers relevante, Aufnahmen bereitstellt, die z.B. automatisch wiedergegeben oder vom Benutzer ausgewählt werden können.

Vorzugsweise handelt es sich bei den Aufnahmen um gesprochene Textbeiträge, wobei grundsätzlich jedoch beliebige Audio- und/oder Videodaten, z.B. zu lesende Texte, Bilder, Filme oder Musikstücke, wiedergegeben werden können. Unter Audio- bzw. Videodaten ist im Rahmen der Erfindung alles zu verstehen, was von einem Benutzer durch Hören bzw. Betrachten wahrgenommen werden kann. "Videodaten" umfassen folglich z.B. auch zu lesende Texte, die auf einer Anzeigeeinrichtung der Wiedergabeeinrichtung dargestellt werden.

Als Einrichtung zur Positionsbestimmung wird bevorzugt ein GPS-System (Global Positioning System) verwendet. Ein derartiges System ist grundsätzlich bekannt, so dass hierauf nicht näher eingegangen wird. Basierend auf der Erfindung kann folglich ein intelligenter "GPS-guide" realisiert werden, dem zu jedem Zeitpunkt der momentane Aufenthaltsort des Benutzers bekannt ist und der den Benutzer automatisch mit ortsspezifischer Information und Unterhaltung in Form von Audio- und/oder Videoaufnahmen versorgen kann.

Erfindungsgemäß braucht der Benutzer, beispielsweise ein sich zu Fuß in einer Stadt fortbewegender Tourist, nicht selbst eine ihn gerade interessierende Information umständlich in einem herkömmlichen oder elektronischen Reiseführer nachzuschlagen, sondern die gesuchte Information wird ihm automatisch ortsgenau präsentiert. Hierzu wird die Momentanposition der Wiedergabeeinrichtung ermittelt und z.B. aus einem in die Wiedergabeeinrichtung integrierten, alle in Frage kommenden Aufnahmen enthaltenden Datenarchiv eine der ermittelten Momentanposition zugeordnete Aufnahme bereitgestellt, so dass diese Aufnahme mittels der Wiedergabeeinrichtung wiedergegeben und so der Benutzer an dem Ort, an dem er sich gerade befindet, z.B. einen gesprochenen Textbeitrag über genau diesen Ort hören kann.

Einem beispielsweise in einem Bus oder Flugzeug sitzenden Reisenden werden erfindungsgemäß keine beliebigen Texte, Filme oder Musikstücke präsentiert, die - wenn überhaupt - nur zufällig einen Bezug zu der momentanen Position des Busses bzw. Flugzeugs aufweisen, sondern die Erfindung ermöglicht es, für den Benutzer gezielt solche Informationen beispielsweise informativer oder unterhaltender Art bereitzustellen, die durch die Position der Wiedergabeeinrichtung und damit des Benutzers bestimmt sind.

Die bereitzustellende Audio- und/oder Videoaufnahme kann einem Datenarchiv entnommen werden, das eine Mehrzahl von positionsspezifischen Audio- und/oder Videoaufnahmen enthält, die jeweils wenigstens einer Position im Nutzungsbereich zugeordnet sind. Ein derartiges Datenarchiv kann sich erfindungsgemäß grundsätzlich an einem beliebigen Ort befinden, wobei es sich um ein mehreren Wiedergabeeinrichtungen zugeordnetes Zentralarchiv handeln kann, auf das von einer grundsätzlich beliebig großen Anzahl von Wiedergabeeinrichtungen zugegriffen werden kann.

Vorzugsweise ist jedoch jeder Wiedergabeeinrichtung ein eigenes Datenarchiv zugeordnet, das in Form eines Speichers oder Datenträgers zusammen mit der Wiedergabeeinrichtung in ein einziges, fest z.B. in einem Fahrzeug installiertes oder tragbares Gerät integriert ist.

Alternativ oder zusätzlich kann erfindungsgemäß vorgesehen sein, dass die bereitzustellende Audio- und/oder Videoaufnahme eine Live-Aufnahme ist, die direkt oder zeitverzögert von einem Aufnahmesystem übertragen wird, das sich an einem von der ermittelten Momentanposition abhängigen Aufnahmeort befindet. Insbesondere kann eine Vielzahl derartiger Aufnahmesysteme vorgesehen sein, die über den jeweiligen Nutzungsbereich verteilt angeordnet sind, wobei die bereitzustellende Live-Aufnahme jeweils von demjenigen Aufnahmesystem übertragen wird, dessen Aufnahmeort der ermittelten Momentanposition der Wiedergabeeinrichtung entspricht, dieser Momentanpositon am nächsten kommt oder ausgehend von dieser Momentanposition automatisch oder von dem Benutzer ausgewählt wird.

Auf diese Weise können beispielsweise Bus-, Zug- oder Flugzeugpassagieren automatisch Live-Bilder von dem Ort präsentiert werden, den die Passagiere gerade durchfahren bzw. überfliegen.

Die Wiedergabeeinrichtung ist vorzugsweise in der Lage, in Form von grundsätzlich ein beliebiges Format aufweisenden Audio- und/oder Videodateien vorliegende Aufnahmen zu lesen und wiederzugeben. Derartige Dateien können problemlos von einem beliebigen Ort aus zur Wiedergabeeinrichtung übertragen werden. Alternativ oder zusätzlich kann die Wiedergabeeinrichtung ein Lesegerät für Datenträger z.B. in Form von CDs, DVDs oder anderen Speichermedien aufweisen, die ein Archiv mit allen Aufnahmen enthalten, welche in Abhängigkeit von der jeweils ermittelten Momentanposition der Wiedergabeeinrichtung bereitgestellt werden können.

Die Bewegung der Wiedergabeeinrichtung im Nutzungsbereich kann mittels eines beliebigen Beförderungsmittels, Fortbewegungsmittels oder Fahrzeugs für Personen erfolgen, beispielsweise mittels eines Flugzeuges, eines Schiffes, eines Zuges oder eines Pkw. Hierbei kann die Wiedergabeeinrichtung ein fester Bestandteil des jeweiligen Fahrzeuges sein. Es ist aber auch möglich, tragbare Wiedergabeeinrichtungen vorzusehen, die der Benutzer mit sich führt, wenn er sich beispielsweise zu Fuß, mit dem Fahrrad oder mit dem Pkw fortbewegt. Bei entsprechender Genauigkeit der Positionsbestimmung kann die Erfindung auch für eine zu Fuß erfolgende Fortbewegung des Benutzers und damit der vom Benutzer mitgeführten Wiedergabeeinrichtung verwendet werden. Die Wiedergabe oder zumindest die Bereitstellung einer betreffenden Audio- und/oder Videoaufnahme kann dann automatisch jeweils erfolgen, sobald sich der Benutzer an der Position befindet oder sich der Position nähert, die der betreffenden Aufnahme zugeordnet ist.

So können beispielsweise einem sich durch eine Stadt bewegenden Touristen mittels seines Wiedergabegerätes automatisch das Innere einer Kirche, eines Palastes oder eines Museums zeigende Bilder präsentiert werden, sobald sich der Tourist an oder nahe der Kirche, des Palastes bzw. des Museums befindet, so dass der Tourist anhand der Bilder entscheiden kann, ob sich ein Besuch der betreffenden Sehenswürdigkeit für ihn lohnt. Die Bilddaten können auf einem auswechselbaren, ausschließlich die jeweilige Stadt betreffenden Datenträger - z.B. einer CD, einer DVD oder einem anderen Speichermedium - gespeichert sein. Anstelle von oder zusätzlich zu Bildern können dem Benutzer auch gesprochene Textbeiträge über die jeweilige Sehenswürdigkeit präsentiert werden.

Der Nutzungsbereich, in welchem die Wiedergabeeinrichtung bewegt wird, kann grundsätzlich von einem beliebigen räumlich abgegrenzten Bereich gebildet werden. Insbesondere kann es sich bei dem Nutzungsbereich um die ganze Erde, ein Land oder eine Region handeln. Es ist aber auch möglich, den Nutzungsbereich auf einen kleineren räumlichen Bereich wie beispielsweise eine Stadt oder ein Gebäude zu beschränken. Grundsätzlich kann jede Sehenswürdigkeit, die eine bestimmte, von der Ortsauflösung der Positionsbestimmungseinrichtung abhängige räumliche Mindestausdehnung aufweist, als Nutzungsbereich für die Erfindung und damit für die bewegbare Wiedergabeeinrichtung vorgesehen werden. Vorzugsweise sind als Nutzungsbereiche nicht Innenräume, sondern ausschließlich Außenbereiche vorgesehen, wodurch eventuelle Probleme mit der Übertragung von Daten an die und von der Wiedergabeeinrichtung zur Positionsbestimmung und zur Bereitstellung der Aufnahmen von vorneherein vermieden werden.

Erfindungsgemäß kann der gesamte Nutzungsbereich "aktiv" sein, so dass unabhängig davon, wo sich die Wiedergabeeinrichtung momentan innerhalb des Nutzungsbereiches befindet, stets eine positionsspezifische Audio- und/oder Videoaufnahme bereitgestellt wird. Alternativ ist es möglich, dass der Nutzungsbereich "inaktive" Zonen enthält, denen keine Aufnahme oder lediglich eine solche Aufnahme zugeordnet ist, die den Benutzer darüber informiert, dass er sich momentan in einem "inaktiven" Bereich aufhält. In einer weiteren Alternative kann der Benutzer automatisch einen Hinweis auf in der Nähe befindliche Orte erhalten, zu denen bereitstellbare Aufnahmen existieren.

Um ein besonders hohes Maß an Flexibilität zu erzielen, wird gemäß einem bevorzugten Ausführungsbeispiel der Erfindung vorgeschlagen, dass eine solche Audio- und/oder Videoaufnahme bereitgestellt wird, die einer solchen Position zugeordnet ist, welche von der ermittelten Momentanposition der Wiedergabeeinrichtung verschieden ist, wobei die bereitzustellende Aufnahme mittels einer automatischen oder vom Benutzer betätigbaren Navigationseinrichtung in Abhängigkeit von der ermittelten Position angewählt wird.

Zur Wiedergabe bereitgestellt wird hierbei also nicht eine Aufnahme, die sich direkt auf die Momentanposition der Wiedergabeeinrichtung, sondern auf eine andere Position bezieht, die in einer vorgegebenen oder durch den Benutzer vorgebbaren Art und Weise von der ermittelten Momentanposition der Wiedergabeeinrichtung abhängt bzw. mit dieser ermittelten Position verknüpft ist.

Eine automatische Navigationseinrichtung kommt insbesondere dann zum Einsatz, wenn die Wiedergabe der Aufnahmen bei sich bewegender Wiedergabeeinrichtung erfolgt. Hierbei kann zusätzlich zu der Momentanposition der Wiedergabeeinrichtung von deren Geschwindigkeit und Bewegungsrichtung Gebrauch gemacht werden, wobei Geschwindigkeit und Richtung ebenfalls durch die Einrichtung zur Positionsbestimmung, insbesondere durch ein GPS-System, ermittelt werden können.

So kann z.B. einem Busreisenden automatisch eine Aufnahme präsentiert werden, die sich auf einen erst im weiteren Verlauf der Reiseroute liegenden Ort bezieht, von dem das erfindungsgemäße Wiedergabesystem aber aufgrund der momentanen Bewegungsdaten, d.h. Position, Geschwindigkeit und Richtung, "weiß", dass er innerhalb einer bestimmten Zeitspanne erreicht wird.

Eine fest vorgegebene Reiseroute, wie sie zumindest bei Zugfahrten und Flugreisen und gegebenenfalls auch bei Busreisen ohnehin im voraus bekannt ist, kann in die automatische Bereitstellung der Aufnahmen mit einbezogen werden, indem davon Gebrauch gemacht wird, dass das System nicht nur die Orte, die im Verlauf der Reise angefahren bzw. überflogen werden, sondern zumindest näherungsweise auch die dazugehörigen Zeitpunkte kennt.

Es ergeben sich hierdurch mannigfaltige Möglichkeiten zur automatischen Bereitstellung von Aufnahmen. So können z.B. bestimmte Zeitspannen oder Entfernungen fest vorgegeben werden oder durch den Benutzer festlegbar sein und jeweils auf der Grundlage der momentanen Bewegungsdaten entweder alle Aufnahmen oder nur solche mit bestimmten Themen bereitgestellt werden, die Positionen zugeordnet sind, welche innerhalb des Entfernungsbereiches liegen bzw. innerhalb der Zeitspannen voraussichtlich erreicht werden.

Die Umgebung der ermittelten Momentanposition kann dabei in unterschiedliche Zonen aufgeteilt sein, so dass anhand der Zonen zwischen Aufnahmen unterschieden werden kann, die in unterschiedlichen Zonen liegenden Positionen zugeordnet sind. Hierdurch wird eine dynamische Bereitstellung von Aufnahmen realisiert, da sich die Zonenaufteilung stets auf den momentanen Aufenthaltsort der Wiedergabeeinrichtung bezieht, d.h. die in die Zonen unterteilte Umgebung der Wiedergabeeinrichtung bewegt sich zusammen mit dem Benutzer, der die Wiedergabeeinrichtung mit sich führt, durch den Nutzungsbereich.

Dabei kann beispielsweise die Wiedergabeeinrichtung im Zentrum von jeweils eine Zone bildenden konzentrischen Kreisringen liegen, wobei jeder Kreisring ein sich auf das Zentrum beziehendes Entfernungsintervall bzw. Reichweitenintervall darstellt. Zusätzlich können die Kreisringe in jeweils einen bestimmten Winkelbereich abdeckende Sektoren unterteilt sein, um eine eventuell vorhandene Information über die Bewegungsrichtung der Wiedergabeeinrichtung nutzen zu können.

Eine derartige Aufteilung der Umgebung der Wiedergabeeinrichtung in Entfernungs-, Reichweiten- und Richtungszonen kann aber auch für eine vorübergehend unbewegte Wiedergabeeinrichtung sinnvoll sein. Ein an einer Sehenswürdigkeit einer Stadt stehender Tourist beispielsweise kann sich hierdurch ausgehend von seinem momentanen Standort wahlweise über die Sehenswürdigkeit selbst, über das Stadtviertel, in dem die Sehenswürdigkeit liegt, über die Stadt als Ganzes, über die nähere Umgebung der Stadt oder über die Region, in der die Stadt liegt, informieren lassen, wobei hierbei zusätzlich hinsichtlich der Richtung - z.B. relativ grob hinsichtlich der Himmelsrichtung - differenziert werden kann. Alle über ihre Positionen diesen Zonen zugeordnete Aufnahmen können automatisch aufgrund des ermittelten momentanen Aufenthaltsortes des Benutzers bereitgestellt und dem Benutzer zur Auswahl angeboten werden.

Erfindungsgemäß ist es somit stets die ermittelte Momentanposition der Wiedergabeeinrichtung, die gewissermaßen den "Anker" für die Bereitstellung der Aufnahmen bildet.

Das Auffinden der "richtigen" Aufnahmen ausgehend von der ermittelten Momentanposition kann durch die automatische Navigationseinrichtung erfolgen. Alternativ oder zusätzlich kann der Benutzer ausgehend von seinem momentanen Standort mittels einer von ihm betätigbaren Navigationseinrichtung selbst individuell innerhalb der Zonen navigieren, um sich über lohnende Ziele in seiner näheren oder weiteren Umgebung zu informieren.

Dabei kann vorgesehen sein, dass für die Umgebung der ermittelten Momentanposition jeweils eine Mehrzahl von Zonenaufteilungen unterschiedlicher Feinheit vorgesehen ist.

Gemäß einem weiteren Ausführungsbeispiel kann vorgesehen sein, dass der Nutzungsbereich in wenigstens ein Raster von Positionen aufgeteilt ist, wobei die Positionsbestimmung mit einer der Rasterung entsprechenden Ortsauflösung vorgenommen wird. So kann der gesamte Nutzungsbereich in eine Vielzahl von Zellen oder Bereichen aufgeteilt sein, nach denen die in einem Datenarchiv vorhandenen oder von vor Ort befindlichen Aufnahmesystemen live übertragbaren Audio- und/oder Videoaufnahmen voneinander unterschieden werden.

Auf diese Weise kann eine statische Aufteilung des Nutzungsbereiches realisiert werden. Die Rasterzellen können z.B. mittels einer automatischen oder vom Benutzer betätigbaren Navigationseinrichtung angewählt werden.

Eine weitere Möglichkeit zur Nutzung eines solchen Rasters besteht z.B. darin, an einer sich durch den Nutzungsbereich bewegenden und dabei nacheinander verschiedene Rasterzellen durchquerenden Wiedergabeeinrichtung automatisch jeweils nur solche Aufnahmen bereitzustellen, die der der Momentanposition der Wiedergabeeinrichtung entsprechenden Rasterzelle zugeordnet sind. So kann beispielsweise mit dem Eintritt in eine neue Rasterzelle automatisch eine Aufnahme bereitgestellt werden, die sich auf einen innerhalb dieser Rasterzelle liegenden Gegenstand wie z.B. eine Sehenswürdigkeit bezieht.

In einer flexibleren Ausgestaltung dieses Rasterprinzips kann der Nutzungsbereich in mehrere Raster unterschiedlicher Feinheit aufgeteilt sein.

Hierbei können die ermittelte Position der Wiedergabeeinrichtung und die Position der bereitzustellenden Audio- und/oder Videoaufnahme unterschiedlichen Rastern angehören. Der Benutzer kann z.B. zwischen den verschiedenen Rastern und den damit verbundenen Ortsauflösungen wechseln.

Um insbesondere von den vorstehend erläuterten Möglichkeiten Gebrauch zu machen, ist eine manuelle, vom Benutzer betätigbare Navigationseinrichtung vorzugsweise mit einer Richtungs- und/oder Zoomfunktion versehen, mittels welcher die bereitzustellende Audio- und/oder Videoaufnahme angewählt werden kann.

Mit der Richtungsfunktion kann die Navigationseinrichtung eine bedienungstechnisch einfache Fortbewegung z.B. innerhalb einer die Umgebung der ermittelten Momentanposition bildenden Zonenaufteilung oder innerhalb eines den Nutzungsbereich darstellenden Rasters bieten. Eine Zoom-Funktion kann z.B. dazu dienen, zwischen unterschiedlichen Zonenaufteilungen bzw. Rastern zu wechseln.

Auch unabhängig von einer Zonenaufteilung bzw. von einem Raster kann der Benutzer mit der Richtungsfunktion ausgehend von seiner Momentanposition in einer grundsätzlich frei wählbaren Richtung beispielsweise entfernt gelegene Positionen und damit Aufnahmen anwählen, um auf diese Weise z.B. Informationen über Orte und Sehenswürdigkeiten zu erhalten, die im weiteren Verlauf seiner Reiseroute oder abseits der Reiseroute liegen. Durch die Zoomfunktion kann insbesondere zwischen Nah- und Fernzielen unterschieden werden. Ferner können hierdurch wahlweise Informationen entweder im Rahmen einer Groborientierung über im weiteren Verlauf der Reiseroute liegende Städte oder im Rahmen einer Feinorientierung über um die Momentanposition herum gelegene Sehenswürdigkeiten oder über andere Einrichtungen wie beispielsweise Hotels erhalten werden. Mittels der Zoomfunktion kann dann beispielsweise in die Sehenswürdigkeiten bzw. Hotels "hineingezoomt" werden, um z.B. anhand von Bildern einen Eindruck von dem Inneren einer Kirche oder von der Ausstattung der Hotelzimmer zu bekommen.

Die Richtungs- und Zoomfunktionen brauchen sich allerdings nicht ausschließlich auf Positionen oder Orte, d.h. auf ein räumliches Navigieren zu beziehen, sondern können auch einer zeitlichen oder thematischen Navigation dienen. So kann z.B. mittels der Richtungsfunktion unter verschiedenen Geh- oder Fahrzeiten gewählt oder nach Art einer Menüführung in einem Themenkatalog "geblättert" werden, um z.B. Aufnahmen zu allen Zielen auszuwählen, die zu Fuß innerhalb einer halben Stunde erreicht werden können, bzw. um alle Aufnahmen auszuwählen, die sich mit der Geschichte einer jeweiligen Sehenswürdigkeit befassen. Mittels der Zoomfunktion kann z.B. innerhalb geschichtlicher Zeiträume "gezoomt" werden, um Aufnahmen entweder zu einem zeitlich eng begrenzten Ereignis oder zu einer einen längeren Zeitraum in Anspruch nehmenden geschichtlichen Entwicklung auszuwählen. Auch ein "thematisches Zoomen" ist denkbar, indem mittels der Zoomfunktion z.B. unter sich auf Einzelaspekte des jeweiligen Themas beschränkenden oder einen groben Überblick über dieses Thema gebenden Aufnahmen eine Auswahl getroffen wird.

Die Navigationseinrichtung ist bevorzugt in ein auch die Wiedergabeeinrichtung umfassendes Gerät integriert.

Gemäß einem weiteren bevorzugten Ausführungsbeispiel der Erfindung ist vorgesehen, dass die Wiedergabe von Audio- und/oder Videoaufnahmen automatisch in Abhängigkeit von der momentanen Position, von der momentanen Geschwindigkeit und/oder von der momentanen Bewegungsrichtung der Wiedergabeeinrichtung gesteuert wird. Als Steuerung der Wiedergabe ist grundsätzlich jede Beeinflussung einer normal ablaufenden, vollständigen Wiedergabe einer Aufnahme zu verstehen.

Beispielsweise kann die Steuerung der Wiedergabe eine Maßnahme umfassen, mit der automatisch eine laufende Wiedergabe einer Aufnahme abgebrochen und die Wiedergabe einer anderen Aufnahme gestartet, d.h. automatisch ein Wechsel der wiedergegebenen Aufnahme durchgeführt wird.

Ein solcher Abbruch bzw. Wechsel kann z.B. dann sinnvoll sein, wenn gemäß einem speziellen Wiedergabemodus beabsichtigt ist, dass bei sich bewegender Wiedergabeeinrichtung automatisch eine neue Aufnahme wiedergegeben oder deren Wiedergabe zumindest angeboten wird, sobald die Wiedergabeeinrichtung eine Position erreicht oder sich einer Position nähert, der die neue Aufnahme zugeordnet ist. Der Abbruchzeitpunkt kann positionsabhängig, aber auch geschwindigkeitsabhängig erfolgen, indem z.B. die neue Aufnahme wiedergegeben bzw. angeboten wird, wenn ausgehend von der momentanen Geschwindigkeit der Wiedergabeeinrichtung die Position, der die neue Aufnahme zugeordnet ist, innerhalb einer bestimmten Zeitspanne erreicht wird.

Ein eine derartige situationsabhängige Wiedergabesteuerung beinhaltender spezieller Wiedergabemodus kann fest implementiert, aber auch vom Benutzer manuell aktivierbar, deaktivierbar und durch Verändern der relevanten Abbruchkriterien modifizierbar sein. Es kann außerdem vorgesehen sein, dass unter grundsätzlicher Beibehaltung des speziellen Wiedergabemodus der Wiedergabeabbruch vom Benutzer fallweise rückgängig gemacht oder unterdrückt werden kann. Dies ist z.B. dann sinnvoll, wenn der Benutzer einen laufenden gesprochenen Textbeitrag oder einen laufenden Film weiterhören bzw. weitersehen möchte, obwohl eine neue, insbesondere ortsaktuellere Aufnahme zur Verfügung steht und wiedergegeben werden könnte.

Die vorhandenen Audio- und/oder Videoaufnahmen können mit speziellen Schnittmarkierungen versehen sein, die dafür sorgen, dass ein Wiedergabeabbruch nur an einer dieser Markierungen erfolgt. Im Fall eines Wiedergabemodus mit aktivierter automatischer Abbruch- bzw. Wechselfunktion, wie sie vorstehend erläutert wurde, läuft die Wiedergabe also bis zur nächsten Schnittmarkierung weiter, obwohl bereits eine neue Wiedergabe zur Verfügung steht. Eventuell als störend empfundene abrupte Schnitte zwischen aufeinander folgend wiedergegebenen Aufnahmen können hierdurch vermieden werden.

Des Weiteren kann erfindungsgemäß vorgesehen sein, dass in Abhängigkeit von der ermittelten Position ein Katalog von Audio- und/oder Videoaufnahmen bereitgestellt wird, aus dem mittels einer automatischen oder einer vom Benutzer betätigbaren Auswahleinrichtung eine wiederzugebende Aufnahme ausgewählt wird.

In einer bevorzugten speziellen Anwendung kann die Bereitstellung des Kataloges - für den Benutzer unsichtbar - im Hintergrund erfolgen, woraufhin eine automatische Auswahleinrichtung die Aufnahme gemäß einem vorgegebenen oder eingelernten Benutzerprofil auswählt. Aus einer Vielfalt von zu der ermittelten Momentanpositon vorhandenen Aufnahmen kann dem Benutzer folglich automatisch eine seinen Vorlieben entsprechende Aufnahme präsentiert werden. Dieser persönliche Zuschnitt kann themenorientiert erfolgen, indem z.B. einem vornehmlich geschichtlich, religiös, politisch oder an witzigen Anekdoten interessierten Benutzer ausschließlich einen solchen Inhalt aufweisende Aufnahmen angeboten werden.

Es kann auch eine z.B. durch den Benutzer aktivierbare Zufallsfunktion vorgesehen sein, mit der aus einer Mehrzahl von Themenkategorien, auf welche die vorhandenen Audio- und/oder Videoaufnahmen aufgeteilt sind, automatisch nach dem Zufallsprinzip eine Kategorie ausgewählt wird.

Allgemein kann erfindungsgemäß auch unabhängig von dem vorstehend erläuterten Katalogprinzip die Bereitstellung der Aufnahmen selektiv entsprechend einem Benutzerprofil erfolgen. Ein die Aufnahmen entsprechend selektierender "Filter" kann entweder vom Benutzer selbst eingestellt oder durch Auswerten der Vorlieben des Benutzers anhand bereits erfolgter Auswahlentscheidungen des Benutzers automatisch installiert und in diesem Sinne "eingelernt" werden.

Weitere Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: schematisch ein erfindungsgemäß verwendbares Wiedergabesystem gemäß einer Ausführungsform der Erfindung, und
- Fig. 2: eine schematische Darstellung zur Veranschaulichung der Einsatzmöglichkeiten der Erfindung.

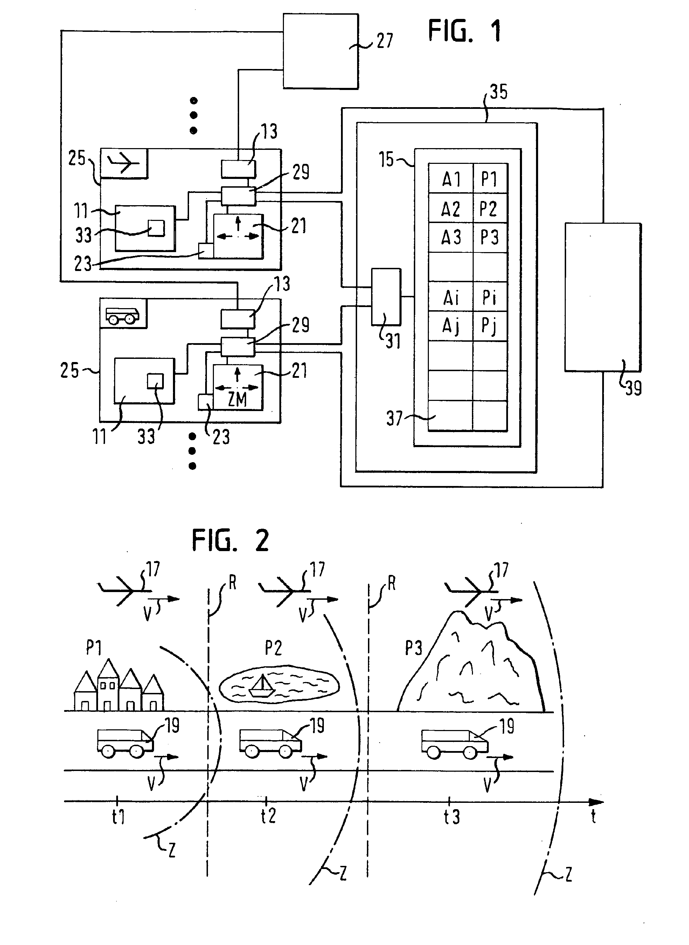

Das Wiedergabesystem gemäß Fig. 1 umfasst eine Vielzahl von bewegbaren Einheiten 25, die hier in Form von Fahrzeugeinheiten vorgesehen und beispielsweise in Flugzeugen und Kraftfahrzeugen wie z.B. Pkws oder Bussen fest installiert sind, wie es in Fig. 1 durch die entsprechenden Symbole angedeutet ist und worauf nachstehend in Verbindung mit Fig. 2 näher eingegangen wird. Alternativ können die bewegbaren Einheiten 25 auch in Form tragbarer handlicher Geräte vorgesehen sein, die ein sich z.B. zu Fuß fortbewegender Benutzer problemlos mit sich führen kann.

Die Anzahl derartiger bewegbarer Einheiten 25 ist erfindungsgemäß grundsätzlich beliebig, wie es die Wiederholungspunkte in Fig. 1 veranschaulichen.

Jede Fahrzeugeinheit 25 umfasst eine Wiedergabeeinrichtung 11, die in der Lage ist, Audio- und/oder Videodaten wiederzugeben, d.h. Audiodaten z.B. in Form von gesprochenen Textbeiträgen oder Musikstücken über ein Lautsprechersystem abzugeben bzw. Videodaten z.B. in Form von Filmen, Bildern oder zu lesenden Texten an einem Bildschirm oder Display anzuzeigen. Die Wiedergabeeinrichtung 11 ist mit einem Speicher 33 versehen, der ein eine Vielzahl von Aufnahmen enthaltendes Archiv bildet oder in dem wiederzugebende Aufnahmen A zwischengespeichert werden können.

Ferner ist jede bewegbare Einheit 25 mit einer zentralen Steuereinrichtung 29 versehen, die mit der bereits erwähnten Wiedergabeeinrichtung 11, einer Navigationseinrichtung 21, einer Auswahleinrichtung 23, einer Positionsbestimmungseinrichtung 13 sowie externen Einrichtungen 35 bzw. 39 kommuniziert, auf die nachstehend näher eingegangen wird.

Bei der Einrichtung 13 zur Positionsbestimmung handelt es sich in diesem Ausführungsbeispiel um einen Bestandteil eines GPS-Systems (Global Positioning System), und zwar um eine benutzerseitige bewegbare Einheit des GPS-Systems, die zur Bestimmung ihrer Position auf der Erde mit Satelliten 27 kommuniziert und weitere hier nicht dargestellte Einrichtungen des GPS-Gesamtsystems nutzt.

Mittels der Positionsbestimmungseinrichtung 13 kann jederzeit automatisch die Momentanposition der Wiedergabeeinrichtung 11 und damit der Standort der betreffenden bewegbaren Einheit 25 bestimmt werden.

Mit der Navigationseinrichtung 21 ist es dem Benutzer möglich, ausgehend von seiner automatisch mittels der Positionsbestimmungseinrichtung 13 ermittelten Momentanposition andere Positionen bzw. diesen Positionen zugeordnete Aufnahmen anzuwählen, die grundsätzlich in beliebiger Richtung liegen können, wie es durch die Pfeile angedeutet ist. Ferner kann der Benutzer mittels einer in Fig. 1 durch "ZM" angedeuteten Zoomfunktion der Navigationseinrichtung 21 zwischen verschiedenen Zonenaufteilungen seiner Umgebung oder zwischen verschiedenen Positionsrastern, in welche der jeweilige Nutzungsbereich unterteilt ist, wechseln. Hierauf wird nachstehend in Verbindung mit Fig. 2 näher eingegangen. Neben diesen räumlichen Funktionen ermöglicht die Navigationseinrichtung 21 auch ein zeitliches und thematisches Navigieren, wie es im Einleitungsteil erläutert ist.

Ferner ist eine Auswahleinrichtung 23 vorgesehen, die dazu dient, aus einem Katalog von zu einer ermittelten bzw. angewählten Position angebotenen bzw. bereitgestellten Aufnahmen eine interessierende Aufnahme auszuwählen.

Die Bereitstellung einer jeweils wiederzugebenden Audio- und/oder Videoaufnahme A kann über ein eine oder mehrere Datenbanken 37 umfassendes Datenarchiv 15 erfolgen, das zu einer Zentrale 35 gehört, die an einem beliebigen festen Ort gelegen ist. Die Zentrale 35 umfasst ferner eine Steuereinrichtung 31, die mit der Datenbank 37 in Verbindung steht und mit den Steuereinrichtungen 29 der einzelnen bewegbaren Einheiten 25 kommunizieren kann.

Eine alternative Möglichkeit, Audio- und/oder Videoaufnahmen an den Fahrzeugeinheiten 25 bereitzustellen, besteht in der Verwendung einer Mehrzahl von Aufnahmesystemen 39, von denen in Fig. 1 lediglich ein Aufnahmesystem dargestellt ist. Insbesondere kann ein zu errichtendes oder bereits vorhandenes, den Nutzungsbereich und insbesondere die ganze Erde umspannendes Netz von Aufnahmesystemen 39 verwendet werden, um auf diese Weise die Möglichkeit zu bieten, an den bewegbaren Einheiten 25 von einer Vielzahl von Orten auf der Erde stammendes Bildund Tonmaterial bereitzustellen. Ein solches Netz von Aufnahmesystemen 39 kann auch dazu dienen, Aufnahmestücke zu produzieren und diese als vorgefertigte Aufnahmen aus einem Datenarchiv abrufbar vorzuhalten.

Bevorzugt umfasst jedes Aufnahmesystem 39 zumindest eine Kamera zur Aufnahme von Videodaten, wobei optional zusätzlich ein Mikrophon zur Aufnahme von Audiodaten vorgesehen sein kann. Bei dem Aufnahmesystem 39 kann es sich um ein automatisch arbeitendes, fernsteuerbares System handeln. Alternativ kann eine an dem jeweiligen Aufnahmeort befindliche Infrastruktur aus Kamerasystem, Tonsystem und Bedienungspersonal ein Aufnahmesystem 39 im Sinne der Erfindung bilden.

Die Aufnahmesysteme 39 gestatten es, an den bewegbaren Einheiten 25 Live-Aufnahmen bereitzustellen, so dass beispielsweise in einem Flugzeug oder in einem Bus reisenden Passagieren eine Live-Übertragung von einem Ort präsentiert werden kann, an welchem oder in dessen Nähe sich das betreffende Fahrzeug gerade befindet.

Es ist auch möglich, gleichzeitig sowohl Aufnahmen aus dem Datenarchiv 37 als auch von dem Kamerasystem 39 stammende Live-Aufnahmen an den bewegbaren Einheiten 25 bereitzustellen, um dem Benutzer die Möglichkeit zu bieten, z.B. mittels der Auswahleinrichtung 23 aus diesem Angebot eine Aufnahme auszuwählen, wenn er sich an der betreffenden, durch die Positionsbestimmungseinrichtung 13 ermittelten Position befindet.

In Abhängigkeit von der jeweiligen Anwendung kann es bevorzugt sein, alle für diese Anwendung zur Verfügung stehenden Aufnahmen direkt an der Wiedergabeeinrichtung 11 vorzuhalten, d.h. der Speicher 33 - z.B. eine CD, eine DVD oder ein beliebiges anderes Speichermedium - bildet in diesem Fall das alle bereitstellbaren Aufnahmen enthaltende Datenarchiv. Die bewegbare Einheit 25, z.B. ein handliches Gerät, das ein sich zu Fuß fortbewegender Tourist problemlos mit sich führen und verstauen kann, ist dann abgesehen von der Nutzung des GPS-Systems vollkommen autark und erfordert insbesondere weder eine Kommunikation noch einen Datenaustausch mit externen Einrichtungen wie z.B. der Zentrale 35 oder dem Aufnahmesystem 39 in dem Ausführungsbeispiel der Fig. 1.

Die eigentliche Bestimmung der Momentanposition des Benutzers kann am Ort der Wiedergabeeinrichtung 11 oder an einer anderen Stelle erfolgen, z.B. innerhalb des GPS-Gesamtsystems oder an einer Zentrale des Wiedergabesystems, beispielsweise an der auch das Datenarchiv 15 umfassenden Zentrale 35. Zur Übertragung der hierfür benötigten Daten von der Wiedergabeeinrichtung 11 bzw. der betreffenden bewegbaren Einheit 25 an eine externe Einrichtung ist die Wiedergabeeinrichtung 11 bzw. die bewegbare Einheit 25 mit einer Sendeeinrichtung (nicht dargestellt) versehen, die z.B. zwischen den Steuereinrichtungen 29, 31 vorgesehene Kommunikationswege nutzen kann. Es kann eine Zentrale, die mit der das Datenarchiv 15 umfassenden Zentrale 35 nicht identisch zu sein braucht und z.B. an einem von dieser entfernten Ort liegen kann, vorgesehen sein, die dazu dient, Positionsdaten einer oder mehrerer Wiedergabeeinrichtungen 11 zu empfangen bzw. diese Positionsdaten auf der Grundlage empfangener Basisdaten zu bestimmen und daraufhin die Zentrale 35 jeweils zu veranlassen, die betreffende Aufnahme A an die jeweilige Wiedergabeeinrichtung 11 zu übermitteln.

In einem Passagiere befördernden Flugzeug 17 oder Bus 19 (Fig. 2), das bzw. der sich in einem den Zeitpunkt t1 enthaltenden Zeitraum über bzw. in oder nahe einer an der Position P1 gelegenen Stadt befindet, wird automatisch mittels des Wiedergabesystems gemäß Fig. 1 an einer mehreren Passagieren zugeordneten Wiedergabeeinrichtung 11 eine Audiound/oder Videoaufnahme A1 bereitgestellt, nachdem mittels der dem Flugzeug 17 bzw. Bus 19 zugeordneten Positionsbestimmungseinrichtung 13 über das GPS-System die Momentanposition P1 des Flugzeugs 17 bzw. des Busses 19 ermittelt und aus der Datenbank 37 des mit der Steuereinrichtung 29 kommunizierenden Datenarchivs 15 die dieser Position P1 zugeordnete Aufnahme A1 abgerufen wurde.

Vorzugsweise ist eine automatische kontinuierliche Positionsbestimmung vorgesehen, so dass zu jedem Zeitpunkt die aktuelle Position P des Fahrzeugs 17, 19 bekannt ist.

Die Steuereinrichtung 29 der jeweiligen Fahrzeugeinheit 25 und die Steuereinrichtung 31 der Zentrale 35 sorgen für den erforderlichen Datenaustausch zwischen bewegbarer Einheit 25 und Zentrale 37 und insbesondere für die Übertragung von zur Positionsbestimmung benötigten Daten sowie der betreffenden positionsspezifischen Aufnahme A von der Zentrale 35 an die bewegbare Einheit 25.

Sofern für diese Position P1 vorgesehen, kann gleichzeitig eine Live-Aufnahme von einem an dem Ort P1 befindlichen Aufnahmesystems 39 im Flugzeug 17 bzw. Bus 19 bereitgestellt werden.

Der Benutzer kann mittels der Auswahleinrichtung 23 zwischen diesen Aufnahmen auswählen und die Wiedergabe der ausgewählten Aufnahme an der Wiedergabeeinrichtung 11 starten. Alternativ kann der Benutzer mittels der Navigationseinrichtung 21 ausgehend von seiner Momentanposition P1 zu solchen Aufnahmen gelangen, die weiteren Positionen P2 und P3 zugeordnet sind, um beispielsweise Informationen über einen See oder ein Gebirge zu erhalten, der bzw. das im weiteren Verlauf der Reiseroute angefahren bzw. überflogen wird (Fig. 2).

Als dynamische Navigationshilfe kann dabei die Umgebung der ermittelten Momentanposition P1 in jeweils eine Zone bildende konzentrische Kreisringe mit der Wiedergabeeinrichtung als Zentrum aufgeteilt sein. In Fig. 2 sind am Beispiel des hier das Zentrum bildenden Fahrzeugs 19 die Grenzen Z der Kreisringzonen durch strichpunktierte Linien angedeutet. Bezüglich der Möglichkeiten, die eine derartige Zonenaufteilung in Verbindung mit einer Navigationseinrichtung bietet, wird zur Vermeidung von Wiederholungen auf den Einleitungsteil verwiesen.

Erfindungsgemäß können also auch solche Aufnahmen Aj wiedergegeben werden, die solchen Positionen Pj zugeordnet sind, welche sich von der Momentanposition Pi des Benutzers bzw. der Wiedergabeeinrichtung 11 unterscheiden. So kann z.B. ein sich momentan am Ort P1 befindlicher Buspassagier über seine Navigationseinrichtung 21 die übernächste Zone und darin die Position P3 auswählen und einen Film über das dort gelegene Gebirge ansehen, um auf diese Weise vorzeitig zu erfahren, was ihn im weiteren Verlauf seiner Busreise erwartet. Dabei braucht der Passagier an seinem Wiedergabegerät nicht gezielt nach dem betreffenden Gebirge zu suchen, sondern lediglich mittels der Navigationseinrichtung 21 ausgehend von der Position P1 zonenweise weiter zu gehen, d.h. schrittweise erfährt der Passagier, was ihn im weiteren Verlauf seiner Route erwartet bzw. was abseits der Route liegt. Eine solche "Vorschau" kann auch automatisch erfolgen, indem in Abhängigkeit von den Bewegungsdaten des Busses 19 eine Aufnahme Aj angeboten, bereitgestellt oder sofort wiedergegeben wird, sobald die Entfernung bzw. die voraussichtliche Fahrzeit zu dem entsprechenden Ort Pj einen vorgegebenen Wert unterschreitet. Eine solche automatische Navigationseinrichtung kann ebenfalls von der vorstehend erläuterten Zonenaufteilung Gebrauch machen.

Während diese Zonenaufteilung sich gemeinsam mit ihrem von der Wiedergabeeinrichtung 11 gebildeten Zentrum fortbewegt und insofern dynamisch ist, kann alternativ oder zusätzlich im Rahmen einer statischen Navigationshilfe von einem eine Vielzahl von Zellen aufweisenden Raster Gebrauch gemacht werden, in das der Nutzungsbereich aufgeteilt ist.

Gelangt das Flugzeug 17 bzw. der Bus 19 ausgehend von der die Position P1 enthaltenden Rasterzelle im weiteren Verlauf der Reiseroute in die nächste Zelle des Positionsrasters, so kann während dieser den Zeitpunkt t2 enthaltenden Zeitdauer an den bewegbaren Einheiten 25 im Flugzeug 17 bzw. im Bus 19 automatisch eine Aufnahme A2 bereitgestellt werden, die dieser Position bzw. diesem räumlichen Bereich P2 zugeordnet ist. In dem Ausführungsbeispiel der Fig. 2 hat die Audio- und/oder Videoaufnahme A2 einen See zum Gegenstand. An den in Fig. 2 durch gestrichelte Linien angedeuteten Grenzen R der Rasterzellen erfolgt somit ein automatischer Wechsel der wiedergegebenen Aufnahme A, wobei diese Grenzen R bzw. die Zeitpunkte der Wechsel eine gewisse Unschärfe aufweisen können. So kann vorgesehen sein, dass die Aufnahmen mit jeweils eine zulässige Abbruchstelle festlegenden Schnittmarkierungen versehen sind und nach Erreichen einer Grenze R erst die nächste Schnittmarkierung der gerade wiedergegebenen Aufnahme Ai abzuwarten ist, bevor die neue Aufnahme Aj gestartet wird. Eine entsprechende automatische Wiedergabesteuerung kann auch in Verbindung mit den Zonengrenzen Z erfolgen. Diesbezüglich wird auch auf die Ausführungen im Einleitungsteil verwiesen.

An die den See P2 als Aufnahmegegenstand enthaltende Rasterzelle oder Zone schließt sich eine weitere Rasterzelle bzw. Zone an, die während einer den späteren Zeitpunkt t3 enthaltenden Zeitspanne durchflogen bzw. durchfahren wird und in welcher eine oder mehrere Audio- und/oder Videoaufnahmen A3 bereitgestellt werden und wiedergegeben werden können, die das in diesem räumlichen Bereich gelegene Gebirge P3 zum Gegenstand haben.

Unabhängig davon, mit welchem Beförderungsmittel ein Benutzer unterwegs ist, kann ihm folglich durch die Erfindung automatisch ein im Verlauf der Fortbewegung wechselndes Angebot von Audio- und/oder Videoaufnahmen präsentiert werden, indem mittels des GPS-Systems 13, 27 automatisch die Momentanposition P seiner Wiedergabeeinrichtung 11 ermittelt und in Abhängigkeit davon die zu dieser Position P in dem integrierten Speicher 33 oder in dem externen Datenarchiv 37 vorgehaltenen und/oder von dem Aufnahmesystem 39 live übertragenen Aufnahmestücke A bereitgestellt werden.

Darüber hinaus bietet die Erfindung mannigfaltige Beeinflussungsmöglichkeiten nicht nur in Bezug auf die wiederzugebenden Aufnahmen selbst, sondern auch hinsichtlich der Art und Weise der Wiedergabe bzw. des Wechsels der Aufnahmen, wobei die Beeinflussungen sowohl automatisch erfolgen als auch durch den Benutzer vorgenommen werden können. Zur Vermeidung von Wiederholungen wird diesbezüglich insbesondere auf die zahlreichen im Einleitungsteil erläuterten Möglichkeiten verwiesen, die auch in Verbindung mit dem anhand der Fig. 1 und 2 erläuterten Ausführungsbeispiel realisiert werden können. -.-.-.

### Bezugszeichenliste

- 11: Wiedergabeeinrichtung
- 13: Positionsbestimmungseinrichtung
- 15: Datenarchiv
- 17: Flugzeug
- 19: Kfz
- 21: Navigationseinrichtung
- 23: Auswahleinrichtung
- 25: Fahrzeugeinheit
- 27: Satellit
- 29: Steuereinrichtung
- 31: Steuereinrichtung
- 33: Speicher
- 35: Zentrale
- 37: Datenbank
- 39: Aufnahmesystem

- A: Audio- und/oder Videoaufnahme
- P: Position
- V: Geschwindigkeit
- Z: Grenze einer Zone
- R: Grenze eines Rasterbereiches

## Patentansprüche

1. Wiedergabeverfahren, bei dem
- eine Einrichtung (11) zur Wiedergabe von Audio- und/oder Videodaten in einem Nutzungsbereich bewegt,
- mittels einer Einrichtung (13) zur Positionsbestimmung die momentane Position (P) der Wiedergabeeinrichtung (11) im Nutzungsbereich ermittelt,
- zumindest eine von der ermittelten Momentanposition (P) der Wiedergabeeinrichtung (11) abhängige Audio- und/oder Videoaufnahme (A) bereitgestellt, und
- die bereitgestellte Audio- und/oder Videoaufnahme (A) mittels der Wiedergabeeinrichtung (11) wiedergegeben wird.

2. Wiedergabeverfahren nach Anspruch 1,
**dadurch gekennzeichnet,**
**dass** zumindest die Ermittlung der Momentanposition (P) der Wiedergabeeinrichtung (11) und die Bereitstellung der dieser Position (P) zugeordneten Audio- und/oder Videoaufnahme (A) automatisch erfolgen.

3. Wiedergabeverfahren nach Anspruch 1 oder 2,
**dadurch gekennzeichnet,**
**dass** die bereitzustellende Audio-/ oder Videoaufnahme (A) einem eine Mehrzahl von positionsspezifischen Aufnahmen (A), die jeweils wenigstens einer Position (P) im Nutzungsbereich zugeordnet sind, enthaltenden Datenarchiv (15) entnommen wird.

4. Wiedergabeverfahren nach einem der vorhergehenden Ansprüche,
**dadurch gekennzeichnet,**
**dass** die bereitzustellende Audio- und/oder Videoaufnahme (A) eine Live-Aufnahme ist, die direkt oder zeitverzögert von einem Aufnahmesystem (39) übertragen wird, das sich an einem von der ermittelten Position (P) abhängigen Aufnahmeort befindet.

5. Wiedergabeverfahren nach einem der vorhergehenden Ansprüche,
**dadurch gekennzeichnet,**
**dass** die Wiedergabeeinrichtung (11) mittels eines zur Beförderung von Personen dienenden Fahrzeuges (17, 19) bewegt wird.

6. Wiedergabeverfahren nach einem der vorhergehenden Ansprüche,
**dadurch gekennzeichnet,**
**dass** als Nutzungsbereich die Erde, ein Land, eine Region, eine Stadt und/oder eine Sehenswürdigkeit vorgesehen wird.

7. Wiedergabeverfahren nach einem der vorhergehenden Ansprüche,
**dadurch gekennzeichnet,**
**dass** als Einrichtung (13) zur Positionsbestimmung ein GPS-System verwendet wird.

8. Wiedergabeverfahren nach einem der vorhergehenden Ansprüche,
**dadurch gekennzeichnet,**
**dass** die Audio- und/oder Videoaufnahmen (A) jeweils wenigstens einen gesprochenen Textbeitrag, einen zu lesenden Text, ein Bild, einen Film und/oder ein Musikstück mit Bezug auf einen positionsspezifischen räumlichen Bereich, insbesondere ein Land, eine Region, eine Stadt und/oder eine Sehenswürdigkeit, umfassen.

9. Wiedergabeverfahren nach einem der vorhergehenden Ansprüche,
**dadurch gekennzeichnet,**
**dass** eine Audio- und/oder Videoaufnahme (Aj) bereitgestellt wird, die einer Position (Pj) zugeordnet ist, welche von der ermittelten Momentanposition (Pi) der Wiedergabeeinrichtung (11) verschieden ist, wobei die bereitzustellende Aufnahme (Aj) mittels einer automatischen oder vom Benutzer betätigbaren Navigationseinrichtung (21) in Abhängigkeit von der ermittelten Momentanposition (Pi) angewählt wird.

10. Wiedergabeverfahren nach Anspruch 9,
**dadurch gekennzeichnet,**
**dass** die Momentanposition (Pi) und die Position (Pj) der angewählten Audio- und/oder Videoaufnahme (Aj) unterschiedlichen Zonen, in welche die Umgebung der Momentanposition (Pi) aufgeteilt ist, oder unterschiedlichen Rastern angehören, in welche der Nutzungsbereich jeweils aufgeteilt ist.

11. Wiedergabeverfahren nach Anspruch 9 oder 10,
**dadurch gekennzeichnet,**
**dass** die bereitzustellende Audio- und/oder Videoaufnahme (A) mittels einer Richtungs- und/oder Zoomfunktion der Navigationseinrichtung (21) angewählt wird.

12. Wiedergabeverfahren nach einem der vorhergehenden Ansprüche,
**dadurch gekennzeichnet,**
**dass** die Audio- und/oder Videoaufnahme (A) zusätzlich in Abhängigkeit von der Geschwindigkeit (V) und/oder der Richtung bereitgestellt wird, mit der bzw. in die sich die Wiedergabeeinrichtung (11) bewegt, wobei vorzugsweise die Geschwindigkeit (V) bzw. die Richtung mittels der Positionsbestimmungseinrichtung (13) ermittelt wird.

13. Wiedergabeverfahren nach einem der vorhergehenden Ansprüche,
**dadurch gekennzeichnet,**
**dass** die Wiedergabe von Audio- und/oder Videoaufnahmen (A) automatisch in Abhängigkeit von der momentanen Position (P), von der momentanen Geschwindigkeit (V) und/oder von der momentanen Bewegungsrichtung der Wiedergabeeinrichtung (11) gesteuert wird,
wobei insbesondere die Steuerung der Wiedergabe umfasst, dass die Wiedergabe einer Aufnahme (Ai) abgebrochen und die Wiedergabe einer anderen Aufnahme (Aj) gestartet wird.

14. Wiedergabeverfahren nach Anspruch 13,
**dadurch gekennzeichnet,**
**dass** ein Abbruch der Wiedergabe einer Audio- und/oder Videoaufnahme (A) nur an einer vorgegebenen Schnittmarkierung der Aufnahme (A) erfolgt.

15. Wiedergabeverfahren nach einem der vorhergehenden Ansprüche,
**dadurch gekennzeichnet,**
**dass** mittels einer automatischen oder vom Benutzer betätigbaren Auswahleinrichtung (23) aus einem von der ermittelten Momentanposition (P) abhängigen Katalog von Audio- und/oder Videoaufnahmen (A) eine wiederzugebende Aufnahme (A) ausgewählt wird.

16. Wiedergabeverfahren nach einem der vorhergehenden Ansprüche,
**dadurch gekennzeichnet,**
**dass** die Audio- und/oder Videoaufnahme (A) automatisch gemäß einem vorgegebenen oder einem eingelernten Benutzerprofil bereitgestellt wird.

17. Wiedergabesystem, mit
- einer Einrichtung (11) zur Wiedergabe von Audio- und/oder Videodaten, die in einem Nutzungsbereich bewegbar ist,
- einer Einrichtung (13) zur Positionsbestimmung, mittels welcher die momentane Position (P) der Wiedergabeeinrichtung (11) im Nutzungsbereich ermittelbar ist, und
- einem eine Mehrzahl von positionsspezifischen Audiound/oder Videoaufnahmen (A), die jeweils wenigstens einer Position (P) im Nutzungsbereich zugeordnet sind, enthaltenden Datenarchiv (15) und/oder wenigstens einem zur Aufnahme positionsspezifischer Audio- und/oder Videoaufnahmen (A) ausgebildeten Aufnahmesystem (39), das sich an einem von der ermittelten Momentanposition (P) abhängigen Aufnahmeort befindet,
wobei wenigstens eine positionsspezifische Audio- und/oder Videoaufnahme (A) automatisch in Abhängigkeit von der ermittelten Momentanposition (P) zur Wiedergabe mittels der Wiedergabeeinrichtung (11) bereitstellbar ist.

18. Wiedergabesystem nach Anspruch 17,
**dadurch gekennzeichnet,**
**dass** es zur Verwendung in einem Verfahren gemäß einem der Ansprüche 1 bis 16 ausgebildet ist.
